# EUROPEAN PATENT SPECIFICATION

(11) **EP 1 580 111 B1**
(45) Date of publication and mention of the grant of the patent: **07.03.2012**
(21) Application number: 05102305.9
(22) Date of filing: 22.03.2005
(51) Int. Cl.: B62K 27/00

(54) **Trailer for bicycles or the like for carrying children**
Fahrradanhänger zur Beförderung von Kindern
Remorque de bicyclette pour transport d'enfants

(30) Priority: 23.03.2004 IT MO20040062
(43) Date of publication of application: 28.09.2005
(73) Proprietor: Bellelli S.R.L., 45021 Badia Polesine RO (IT)
(72) Inventor: Bellelli, Tiziano, 45100 Rovigo (IT)
(74) Representative: Brunacci, Marco

(56) References cited:
- AU-B2- 490 002
- DE-A1- 3 310 550
- US-A- 5 020 814
- US-A- 5 599 033
- US-A- 6 056 306
- US-A1- 2002 096 857

## Description

The present invention relates to a trailer for bicycles or the like for carrying children.

For many people who need to carry children by using means of transport such as bicycles and the like, the need is particularly felt to associate with said means of transport devices that are suitable to carry children, such as for example conventional seats that can be fixed to the bicycle frame.

As an alternative to conventional seats, particular trailers that can be towed by bicycles, on board of which it is possible to carry generally one or two children and, if necessary, goods and items in general, are known.

These trailers commonly are mobile on two wheels, which are mutually connected side by side by means of a strong supporting structure, usually provided by assembling metallic tubular elements, which by means of a rigid tow bar can be connected to the frame of a bicycle and can be towed behind it, the adverb" behind" being referred to the normal direction of travel of the vehicle.

The supporting structure of conventional trailers supports a seating platform for the child or children in the free space comprised between the two wheels; said platform is commonly made of plastics or highly stretches fabric and is generally provided with a small seat on which the child can be placed during transport.

Further, some of the metallic tubular elements that constitute the supporting structure are often arranged laterally to the cart, so as to surround the wheels on the opposite side with respect to the seating platform, so as to form a sort of exposed bumper that protects said wheels against any obstacles or hindrances encountered during the travel of the vehicle.

US 6 056 306 discloses a trailer according to the preamble of claim 1 which comprises at least one supporting structure, constituted by a single base made of plastic material, for connecting and supporting at least two wheels and a yoke for connecting the structure to a bicycle. The structure defines a concave portion, suitable to form a seat holder portion. Moreover, the structure presents an upwardly extending rear portion which forms the backrest for the children.

These known types of trailer are not free from drawbacks, including the fact that the supporting structure made of metal has an absolutely substantial weight: the heavier the cart, the harder and more tiring it is for the bicycle user to tow said trailer.

Moreover, it is noted that conventional trailers have particularly high production costs, which are determined by the need to provide components whose shapes, dimensions and materials are different, requiring laborious assembly and fitting operations performed by labor, which has a significant cost.

Moreover, it is noted that the lateral tubular elements that protect the wheels of known trailers are excessively conspicuous and particularly unsightly, in addition to increasing considerably the overall dimensions of the cart and therefore making the driver's steering maneuvers difficult.

The aim of the present invention is to eliminate the above-mentioned drawbacks of the background art, by providing a trailer for bicycles or the like for carrying children that is particularly lightweight and at the same time sturdy, can be towed easily and without a particular expenditure of energy on the part of the bicycle driver, and is convenient from a purely economic standpoint.

Within this aim, an object of the present invention is to provide a structure that is simple, relatively easy to provide in practice, safe in use, effective in operation, and has a relatively low cost.

This aim and this and other objects that will become better apparent hereinafter are achieved by the present trailer for bicycles or the like for carrying children, according to the invention, that has the features set forth in claim 1.

Further characteristics and advantages of the present invention will become better apparent from the hollowing detailed description of a preferred but not exclusive embodiment of a trailer for bicycles or the like for carrying children, illustrated by way of non-limiting example in the accompanying drawings, wherein:

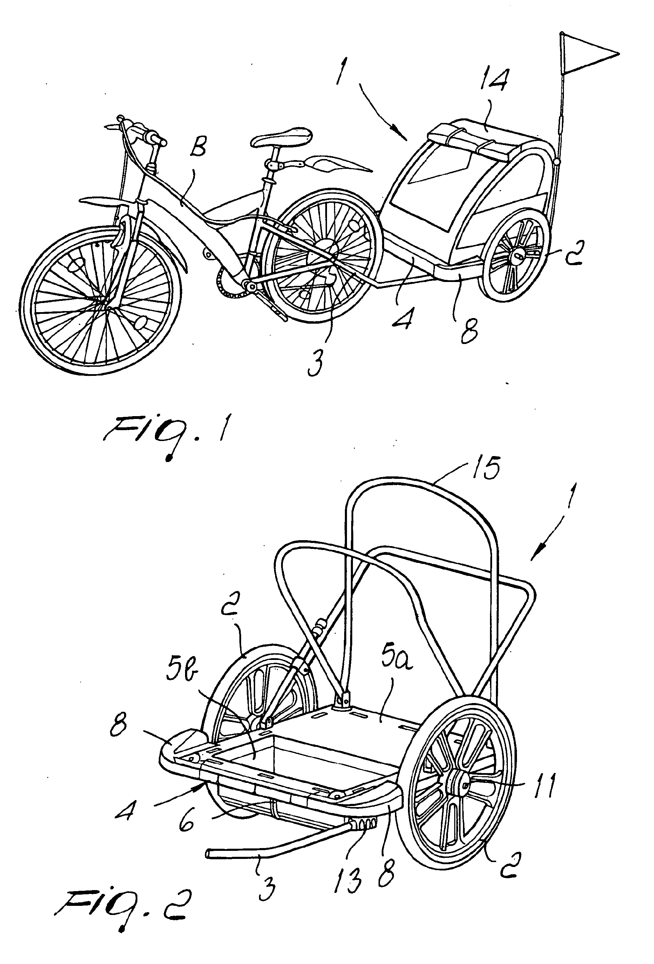

Figure 1 is a perspective view of a bicycle with the trailer according to the invention;
Figure 2 is a schematic partial perspective view of the trailer according to the invention;

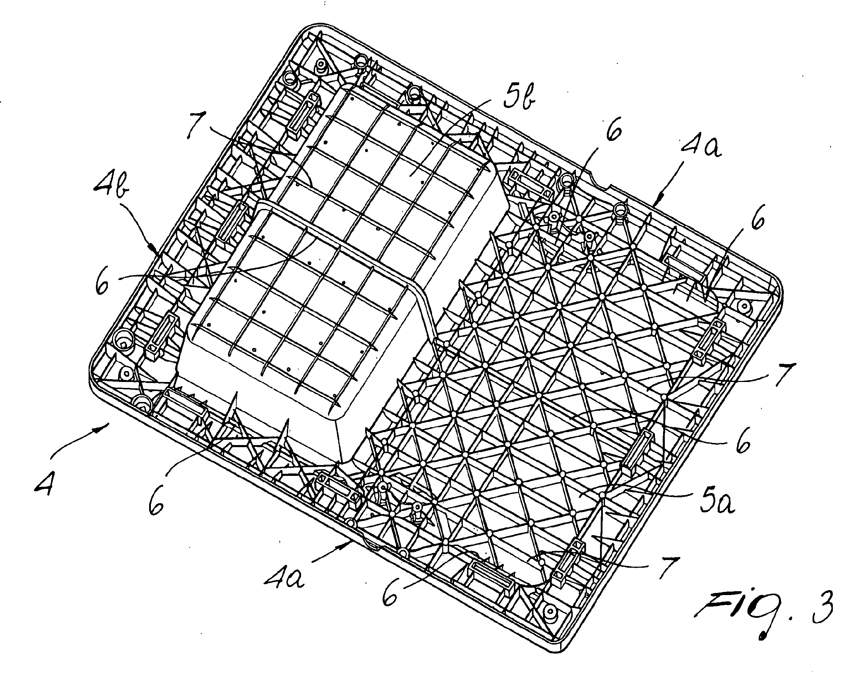

Figure 3 is a perspective view of the base of the trailer according to the invention;

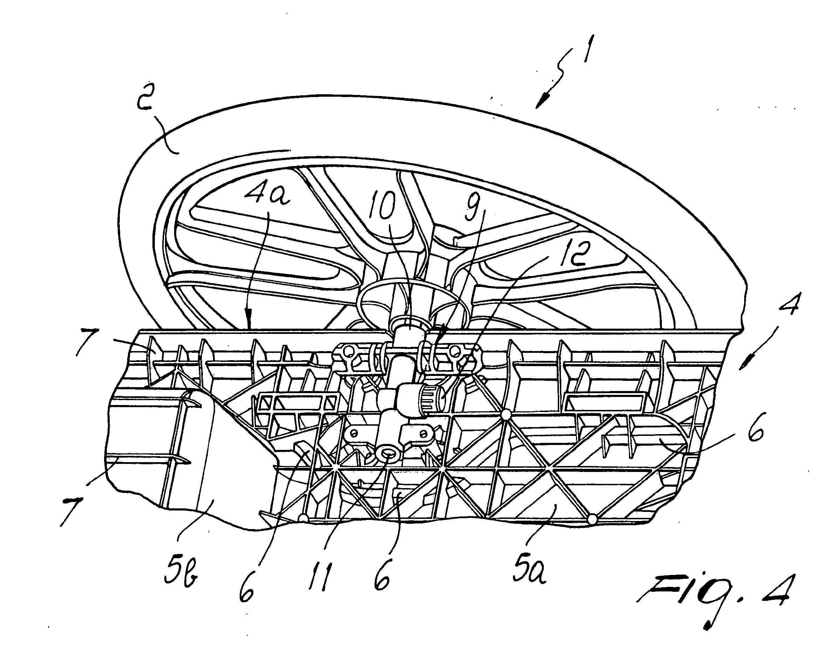

Figure 4 is a schematic partial perspective view of a first detail of the trailer according to the invention;

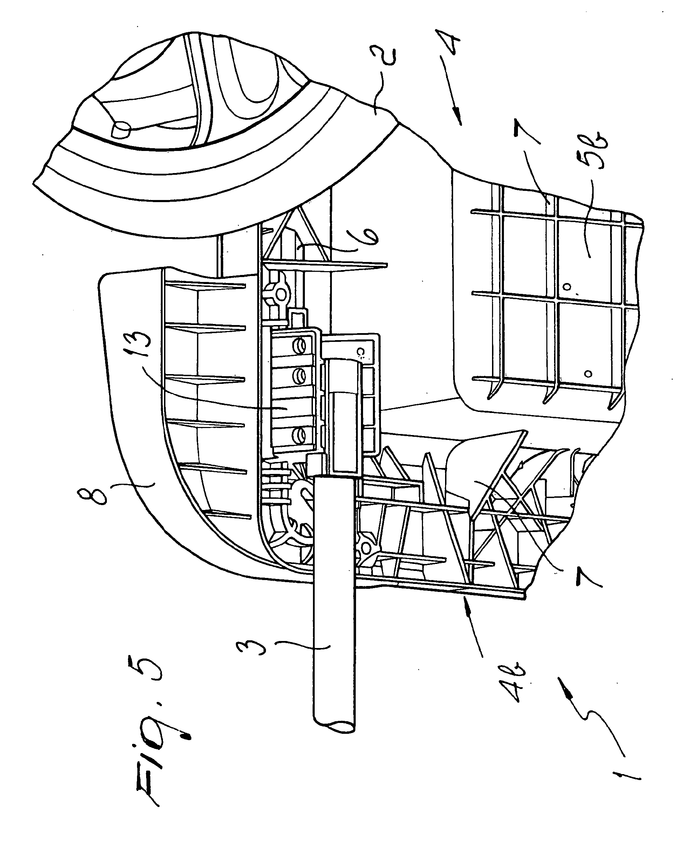

Figure 5 is a schematic partial perspective view of a second detail of the trailer according to the invention.

With reference to the figures, the reference numeral 1 generally designates a trailer for bicycles or the like for carrying children.

The trailer 1 is of the type that comprises a seating platform for one or more children and a supporting structure for connecting and supporting two wheels 2 arranged side by side.

The supporting structure can be towed behind a bicycle B by interposing a connecting body such as a tow bar 3, with ends that can be connected respectively to the frame of the bicycle B and to said supporting structure.

According to the invention, the seating platform and the supporting structure are constituted by a base 4 made of substantially plastic material, whose strength and sturdiness are sufficient to bear the weight of the child or children on the two supporting points formed by the wheels 2.

In greater detail, the base 4 comprises a surface 5, which has a substantially flat part and a substantially concave part, which during use are suitable to form respectively a horizontal seating surface 5a and a recessed footrest 5b for the child or children.

Below the surface 5, the base 4 is provided with three reinforcement ribs 6, which run longitudinally with respect to the bicycle B, i.e., parallel to the direction of travel of the vehicle, substantially along the entire length of said base.

In particular, two of the ribs 6 run along the lateral portions 4a of the base 4 and always remain below the horizontal seating surface 5a; the third rib 6 is instead arranged centrally and partly passes through said surface and partly borders the lower face of the recessed footrest 5b.

The ribs 6 are internally hollow, so as to be particularly lightweight and at the same time provide high resistance to torsional and flexural loads; to obtain said ribs, the base 4 can be provided for example by means of the gas injection technique.

In order to further increase the mechanical strength of the base 4, it is provide with a plurality of reinforcements ridges 7, which have a solid cross-section and are distributed over substantially all of said base below the surface 5.

Conveniently, the trailer 1 is provided with means 8 for protecting the wheels 2 against any impacts against obstacles encountered during the advancement of the bicycle B; for example, said means are of the type of two bumpers, which cantilever out from the sides of the front portion 4b of the base 4, remaining substantially co-planar thereto, their dimensions at right angles to the advancement direction of the bicycle B being substantially equal to the axial extension of the wheels 2.

Further, the present invention is provided with means 9 for the quick coupling of the wheels 2 to the base 4.

Such coupling means comprise for example two elongated hubs 10, each of which is connected in a lower region to a respective lateral portion 4a of the base 4, which is orientated at right angles to the direction of travel of the bicycle B.

In particular, it is possible to insert slidingly in each hub 10 a shaft 11, which is associated coaxially with a corresponding wheel 2 and can rotate about its own axis inside said hub.

Moreover, the coupling means 9 are provided with means for temporarily locking the axial sliding of the shafts 11 within the hubs 10, so that during use the wheels 2 can rotate about their own axis without being able to be separated from the base 4 unless the user intervenes directly.

These locking means, not shown in detail in the figures since they are known, are for example of the type of an annular groove provided on each shaft 11, which can be engaged by a movable pin connected to a pushbutton 12; in practice, the actuation of the pushbutton 12 disengages the pin from the groove in order to disengage the axial sliding of the shaft 11 with respect to the hub 10 and allow quick disengagement of the corresponding wheel 2 from the base 4.

Further, the trailer 1 comprises means 13 for connecting the bar 3 to the base 4.

Preferably, such connection means are constituted by a support, which has a substantially constant C-shaped cross-section and is connected in a lower region to the front portion 4b of said base, with which the bar 3 can be associated so that it can move between an active configuration, in which it protrudes forward with respect to the base 4 in order to be connected to the bicycle B and allow to tow the trailer 1, and an inactive configuration, in which, if it is not used, it is arranged completely below the base 4.

Finally, the trailer 1 is provided with a canopy 14, which is supported on a conventional frame 15 fitted on the base 4 above the surface 5; in particular, the frame 15 can move so as to be able to unfold or fold up quickly the canopy 14.

It should be noted that the coupling means 9, which allow quick connection/disengagement of the wheels with respect to the base 4, the support 13, which allows to position the bar 3 in the active and inactive configurations, and the frame 15, which facilitates the opening/closing of the canopy 14, are particular constructive solutions used in order to reduce the overall dimensions of the present invention when it is stationary and not being used.

When the trailer 1 is not used, the wheels 2 can in fact be disengaged from the base 4, the bar 3 can be stored in an inactive configuration, and the canopy 14 can be folded up.

In practice it has been found that the trailer according to the invention achieves the proposed aim and object.

In this regard, it is noted that the particular solution of providing a plastic base that is particularly strong and sturdy and acts both as a support for the wheels and as a seat for the child or children allows to have a bicycle trailer that is very lightweight and maneuverable, since it has no heavy tubular elements provided in conventional carts and therefore, differently from said carts, it can be towed by a bicycle without tiring the cyclist excessively.

Moreover, it is noted that the present invention has particularly low production costs, by virtue of the fact that the use of the plastic base allows a considerable saving of material in addition to simplifying and speeding up the operations for assembling the components on the part of the assigned personnel.

In particular, with respect to the process for manufacturing traditional trailers, it is no longer necessary to connect metal tubular elements or to fit the seating platform on the supporting structure, since they are provided directly during manufacture of the base provided by the present invention.

Moreover, it is noted that the present bicycle trailer is provided with bumpers, which in addition to being considerably compact are particularly pleasant and harmonious from a purely aesthetic standpoint, and are also far less conspicuous than the exposed metallic tubular elements of conventional carts.

The invention thus conceived is susceptible of numerous modifications and variations, all of which are within the scope of the appended claims.

Further, all the details may be replaced with other technically equivalent elements.

In practice, the materials used, as well as the contingent shapes and dimensions, may be any according to requirements without thereby abandoning the scope of the protection of the appended claims.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A trailer (1) for bicycles or the like for carrying children, of the type that comprises at least one supporting structure for connecting and supporting at least two wheels (2), at least one body for connecting (3) said structure to a bicycle (B), and at least one seating platform for at least one child, wherein said structure and said platform are constituted by a single base (4) substantially made of plastic material, **characterized in that** said base (4) comprises a surface (5) that has a substantially flat part and a substantially concave part, which are suitable to form respectively a horizontal seating surface (5a) and a recessed footrest (5b) for said child, and **in that** said base (4) is provided with a plurality of reinforcement ribs (6) disposed below said surface (5).

2. The trailer (1) according to claim 1, **characterized in that** said ribs (6) run substantially along the entire length of said base (4).

3. The trailer (1) according to one or more of the preceding claims, **characterized in that** said ribs (6) are arranged substantially longitudinally with respect to said bicycle (B).

4. The trailer (1) according to one or more of the preceding claims, **characterized in that** said ribs (6) are internally hollow.

5. The trailer (1) according to one or more of the preceding claims, **characterized in that** said ribs (6) are three, two lateral ones and a central one.

6. The trailer (1) according to one or more of the preceding claims, **characterized in that** said base (4) comprises a plurality of reinforcement ridges (7) that have a solid cross-section.

7. The trailer (1) according to one or more of the preceding claims, **characterized in that** said ridges (7) are distributed over substantially all of said base (4).

8. The trailer (1) according to one or more of the preceding claims, **characterized in that** said base (4) is provided by gas injection of said substantially plastic material.

9. The trailer (1) according to one or more of the preceding claims, **characterized in that** it comprises means for quickly coupling (9) said wheels (2) to said base (4).

10. The trailer (1) according to one or more of the preceding claims, **characterized in that** said coupling means (9) comprise at least one hub (10), which is associated with said base (4) and in which at least one shaft (11) can be inserted so that it can rotate, said shaft (11) being coaxially associated with at least one of said wheels (2), and means for temporarily locking the axial sliding of the shaft (11) within said hub (10).

11. The trailer (1) according to one or more of the preceding claims, **characterized in that** said coupling means (9) comprise two of said hubs (10), which are associated in a lower region with respect to the lateral portions of said base (4), a corresponding shaft (11) associated with a corresponding wheel (2) being insertable in each of said hubs (10).

12. The trailer (1) according to one or more of the preceding claims, **characterized in that** said temporary locking means comprise at least one pushbutton(12), which can be operated in order to disengage the axial sliding of said shaft (11) inside said hub (10).

13. The trailer (1) according to one or more of the preceding claims, **characterized in that** it comprises means for connecting (13) said connecting body (3) to said base (4).

14. The trailer (1) according to one or more of the preceding claims, **characterized in that** said connection means (13) comprise a support, which is associated in a lower region with respect to the front portion (4b) of said base (4), and with which said collecting body (3) is associable so that it can move between an active configuration, in which it protrudes in front of said base (4) in order to be connected to said bicycle (B), and an inactive configuration, in which it is arranged completely below said base (4).

15. The trailer (1) according to one or more of the preceding claims, **characterized in that** it comprises means (8), associated with said base (4), for protecting at least one of said wheels (2).

16. The trailer (1) according to one or more of the preceding claims, **characterized in that** said protective means (8) comprise at least two bumpers, which cantilever out from the sides of said front portion (4b) of the base (4) and are substantially co-planar thereto.

17. The trailer (1) according to one or more of the preceding claims, **characterized in that** the dimensions of said bumpers (8) at right angles to the direction of travel of said bicycle (B) are substantially equal to the axial dimensions of said wheels (2).

## Patentansprüche

1. Anhänger (1) für Fahrräder oder dergleichen zum Transport von Kindern, der mindestens eine Tragkonstruktion zur Verbindung und Halterung von mindestens zwei Rädern (2), mindestens einen Hauptteil zur Verbindung (3) der Konstruktion mit einem Fahrrad (B), und mindestens eine Sitzfläche für mindestens ein Kind besitzt, wobei die Konstruktion und die Sitzfläche aus einer einzelnen Basis (4) bestehen, die im wesentlichen aus Kunststoff hergestellt ist, **dadurch gekennzeichnet, dass** die Basis (4) eine Fläche (5) aufweist, die einen im wesentlichen flachen Teil und einen im wesentlichen konkaven Teil besitzt, die jeweils eine horizontale Sitzfläche (5a) und eine vertiefte Fußstütze (5b) für das Kind bilden, und dass die Basis (4) mit einer Vielzahl von Verstärkungsrippen (6) versehen ist, die unter der Fläche (5) angeordnet sind.

2. Anhänger (1) nach Anspruch 1, **dadurch gekennzeichnet, dass** die Rippen (6) im wesentlichen entlang der gesamten Länge der Basis (4) verlaufen.

3. Anhänger (1) nach einem oder mehreren oder vorhergehenden Ansprüche, **dadurch gekennzeichnet, dass** die Rippen (6) in Bezug auf das Fahrrad (B) im wesentlichen der Länge nach angeordnet sind.

4. Anhänger (1) nach einem oder mehreren der vorhergehenden Ansprüche, **dadurch gekennzeichnet, dass** die Rippen (6) innen hohl sind.

5. Anhänger (1) nach einem oder mehreren der vorhergehenden Ansprüche, **dadurch gekennzeichnet, dass** es sich dabei um drei Rippen (6) handelt, zwei seitliche und eine mittlere.

6. Anhänger (1) nach einem oder mehreren der vorhergehenden Ansprüche, **dadurch gekennzeichnet, dass** die Basis (4) eine Vielzahl von Verstärkungsstegen (7) besitzt, die einen massiven Querschnitt besitzen.

7. Anhänger (1) nach einem oder mehreren der vorhergehenden Ansprüche, **dadurch gekennzeichnet, dass** die Stege (7) im wesentlichen über die gesamte Basis (4) verteilt sind.

8. Anhänger (1) nach einem oder mehreren der vorhergehenden Ansprüche, **dadurch gekennzeichnet, dass** die Basis (4) durch Gaseindüsung des im wesentlichen plastischen Materials hergestellt ist.

9. Anhänger (1) nach einem oder mehreren der vorhergehenden Ansprüche, **dadurch gekennzeichnet, dass** er Vorrichtung zur raschen Kopplung (9) der Räder (2) an die Basis (4) besitzt.

10. Anhänger (1) nach einem oder mehreren der vorhergehenden Ansprüche, **dadurch gekennzeichnet, dass** die Vorrichtung zum Koppeln (9) mindestens eine Nabe (10) aufweist, die mit der Basis (4) verbunden ist, und in die mindestens eine Welle (11) eingeschoben werden kann, so dass sie sich drehen kann, wobei die Welle (11) koaxial mit mindestens einem der Räder (2) verbunden ist, sowie Vorrichtungen zum vorübergehenden Verriegeln der axialen Verschiebung der Welle (11) innerhalb der Nabe (10).

11. Anhänger (1) nach einem oder mehreren der vorhergehenden Ansprüche, **dadurch gekennzeichnet, dass** die Vorrichtung zum Koppeln (9) zwei der Naben (10) aufweist, die in einem unteren Bereich in Bezug auf die seitlichen Abschnitte der Basis (4) verbunden sind, wobei eine entsprechende Welle (11), die mit einem entsprechenden Rad (2) verbunden ist, in jede der Naben (10) eingeschoben werden kann.

12. Anhänger (1) nach einem oder mehreren der vorhergehenden Ansprüche, **dadurch gekennzeichnet, dass** die Vorrichtungen zum vorübergehenden Verriegeln mindestens eine Drucktaste (12) aufweisen, die betätigt werden kann, um die axiale Verschiebung der Welle (11) innerhalb der Nabe (10) zu lösen.

13. Anhänger (1) nach einem oder mehreren der vorhergehenden Ansprüche, **dadurch gekennzeichnet, dass** er Vorrichtungen zur Verbindung (13) des Hauptteils (3) mit der Basis (4) besitzt.

14. Anhänger (1) nach einem oder mehreren der vorhergehenden Ansprüche, **dadurch gekennzeichnet, dass** die Vorrichtung zur Verbindung (13) eine Abstützung aufweist, die in einem unteren Bereich in Bezug auf den vorderen Abschnitt (4b) der Basis (4) verbunden ist, und mit der der Hauptteil zur Verbindung (3) verbunden werden kann, so dass er sich zwischen einer aktiven Konfiguration, in der er vor der Basis (4) herausragt, um mit dem Fahrrad (B) verbunden zu werden, und einer inaktiven Konfiguration, in der er vollständig unter der Basis (4) angeordnet ist, bewegen kann.

15. Anhänger (1) nach einem oder mehreren der vorhergehenden Ansprüche, **dadurch gekennzeichnet, dass** er Vorrichtungen (8) aufweist, die mit der Basis (4) verbunden sind, um mindestens eines der Räder (2) zu schützen.

16. Anhänger (1) nach einem oder mehreren der vorhergehenden Ansprüche, **dadurch gekennzeichnet, dass** die Schutzelemente (8) mindestens zwei Stoßfänger aufweisen, die von den Seiten des vorderen Abschnittes (4b) der Basis (4) vorstehen, und im wesentlichen koplanar dazu verlaufen.

17. Anhänger (1) nach einem oder mehreren der vorhergehenden Ansprüche, **dadurch gekennzeichnet, dass** die Abmessungen der Stoßfänger (8) im rechten Winkel zu der Fahrtrichtung des Fahrrades (B) im wesentlichen den axialen Abmessungen der Räder (2) entsprechen.

## Revendications

1. Remorque (1) pour bicyclettes ou similaire, destinée à transporter des enfants, du type comprenant au moins une structure de support servant à raccorder et à supporter au moins deux roues (2), au moins un corps destiné à raccorder (3) ladite structure à une bicyclette (B), et au moins une plateforme-siège pour au moins un enfant, dans laquelle ladite structure et ladite plateforme sont constituées par une base unique (4) essentiellement faite de matière plastique, ***caractérisée en ce que*** ladite base (4) comprend une surface (5) qui possède une partie sensiblement plate et une partie sensiblement concave, qui sont aptes à former respectivement une surface horizontale (5a) formant siège et un repose-pied encastré (5b) pour ledit enfant, et ***en ce que*** ladite base (4) est pourvue d'une pluralité de nervures (6) de renforcement disposées sous ladite surface (5).

2. Remorque (1) selon la revendication 1, ***caractérisée en ce que*** lesdites nervures (6) courent sensiblement sur toute la longueur de ladite base (4).

3. Remorque (1) selon l'une ou plusieurs des revendications précédentes, ***caractérisée en ce que*** lesdites nervures (6) sont placées de manière sensiblement longitudinale à ladite bicyclette (B).

4. Remorque (1) selon l'une ou plusieurs des revendications précédentes, ***caractérisée en ce que*** lesdites nervures (6) sont intérieurement creuses.

5. Remorque (1) selon l'une ou plusieurs des revendications précédentes, ***caractérisée en ce que*** lesdites nervures (6) sont au nombre de trois, deux latérales et une centrale.

6. Remorque (1) selon l'une ou plusieurs des revendications précédentes, ***caractérisée en ce que*** ladite base (4) comprend une pluralité d'arêtes (7) de renforcement qui ont une section transversale pleine.

7. Remorque (1) selon l'une ou plusieurs des revendications précédentes, ***caractérisée en ce que*** lesdites arêtes (7) sont réparties sur sensiblement toute ladite base (4).

8. Remorque (1) selon l'une ou plusieurs des revendications précédentes, ***caractérisée en ce que*** ladite base (4) est réalisée par injection au gaz de ladite matière essentiellement en plastique.

9. Remorque (1) selon l'une ou plusieurs des revendications précédentes, ***caractérisée en ce qu'**elle* comprend des moyens pour un accouplement rapide (9) desdites roues (2) à ladite base (4).

10. Remorque (1) selon l'une ou plusieurs des revendications précédentes, ***caractérisée en ce que*** lesdits moyens d'accouplement (9) comprennent au moins un moyeu (10) qui est associé à ladite base (4) et dans lequel au moins un arbre (11) peut être inséré afin qu'il puisse tourner, ledit arbre (11) étant associé coaxialement à au moins l'une desdites roues (2), et des moyens pour bloquer temporairement le glissement axial de l'arbre (11) dans ledit moyeu (10).

11. Remorque (1) selon l'une ou plusieurs des revendications précédentes, ***caractérisée en ce que*** lesdits moyens d'accouplement (9) comprennent deux desdits moyeux (10), qui sont associés dans une zone inférieure aux portions latérales de ladite base (4), un arbre correspondant (11) associé à une roue correspondante (2) étant insérable dans chacun desdits moyeux (10).

12. Remorque (1) selon l'une ou plusieurs des revendications précédentes, ***caractérisée en ce que*** lesdits moyens de blocage temporaire comprennent au moins un bouton-poussoir (12) qui peut être actionné de manière à découpler le glissement axial dudit arbre (11) à l'intérieur dudit moyeu (10).

13. Remorque (1) selon l'une ou plusieurs des revendications précédentes, ***caractérisée en ce qu'**elle* comprend des moyens pour raccorder (13) ledit corps (3) de raccordement à ladite base (4).

14. Remorque (1) selon l'une ou plusieurs des revendications précédentes, ***caractérisée en ce que*** lesdits moyens de raccordement (13) comprennent un support qui est associé, dans une zone inférieure, à la portion antérieure (4b) de ladite base (4) et avec lequel ledit corps (3) de raccordement est associable de façon qu'il puisse se déplacer entre une configuration active, dans laquelle il fait saillie à l'avant de ladite base (4) de manière à être raccordé à ladite bicyclette (B), et une configuration inactive, dans laquelle il est totalement situé sous ladite base (4).

15. Remorque (1) selon l'une ou plusieurs des revendications précédentes, ***caractérisée en ce qu*'**elle comprend des moyens (8), associés à ladite base (4), pour protéger au moins l'une desdites roues (2).

16. Remorque (1) selon l'une ou plusieurs des revendications précédentes, ***caractérisée en ce que*** lesdits moyens de protection (8) comprennent au moins deux pare-chocs, qui dépassent en porte-à-faux des côtés de ladite portion antérieure (4b) de la base (4) et sont sensiblement coplanaires de celle-ci.

17. Remorque (1) selon l'une ou plusieurs des revendications précédentes, ***caractérisée en ce que*** les dimensions desdits pare-chocs (8) dans une direction orthogonale à la direction de déplacement de ladite bicyclette (B) sont sensiblement égales aux dimensions axiales desdites roues (2).
